# EUROPEAN PATENT SPECIFICATION

(11) **EP 4 223 384 B1**
(45) Date of publication and mention of the grant of the patent: **09.09.2026**
(21) Application number: 22155009.8
(22) Date of filing: 03.02.2022
(51) Int. Cl.: B01D 46/00, B01D 46/24, B01D 46/64

(54) **FILTER SYSTEM HAVING A PRIMARY AND A SECONDARY FILTER ELEMENT AND SECONDARY FILTER ELEMENT AND PRIMARY FILTER ELEMENT FOR SUCH A FILTER SYSTEM**
FILTERSYSTEM MIT EINEM PRIMÄR- UND EINEM SEKUNDÄRFILTERELEMENT UND PRIMÄRFILTERELEMENT FÜR SOLCH EIN FILTERSYSTEM
SYSTÈME DE FILTRE DOTÉ D'UN ÉLÉMENT FILTRANT PRIMAIRE ET D'UN ÉLÉMENT FILTRANT SECONDAIRE ET ÉLÉMENT FILTRANT PRIMAIRE POUR UN TEL SYSTÈME DE FILTRE

(43) Date of publication of application: 09.08.2023
(73) Proprietor: MANN+HUMMEL GmbH, 71636 Ludwigsburg (DE)
(72) Inventor: ALAGOUDA, Bharatesh, 591201 Chikkodi (IN); SHRIMALI, Mayank, 560072 Bangalore (IN); SHARMA, Mridul, 560077 Bengaluru (IN); JOHN, Juno, 560068 Bangalore (IN)
(74) Representative: Mann + Hummel Intellectual Property

(56) References cited:
- WO-A1-2009/014986
- WO-A1-2010/057843
- WO-A1-2012/116314
- WO-A1-2016/169838
- WO-A1-2020/260159
- DE-A1- 102016 003 454

## Description

### Technical Field

The invention relates to a filter system having a primary and a secondary filter element and a secondary filter element and a primary filter element for such a filter system, in particular for an air filter system of an internal combustion engine.

### Prior Art

It is known to use air filters in order to control combustion intake air for internal combustion engines in passenger vehicles, commercial vehicles, work machines, agricultural vehicles, but also stationary generators and the like. Such air filters generally comprise a housing, an air inlet, and an air outlet, with a removable and replaceable main or primary filter element disposed within the housing. The housing often includes a maintenance cover for access to the filter element inside the housing during maintenance. For this purpose, the filter element can be removed and either replaced by a new filter element, overtaken and reused, or replaced by a previously used, but overtaken filter element.

The filter elements of air filters are usually replaced after a certain operating time. Depending on the dust load on the filter element during usage, the service life of a filter can be several days, for example when used in construction machines, up to several months in a less dusty environment.

In order to protect the clean side of an air cleaner system of an internal combustion engine against penetrating dirt particles when replacing the main filter element, a so-called "secondary filter element" is used, which remains in the filter housing during replacement of the primary filter element. The secondary filter element is usually located on the clean side of the filter element, for example inside the primary filter element, and is connected to the housing of the filter system. The secondary filter element itself also has a filter medium which keeps residual dirt particles away from the filter outlet in the air stream.

Optionally, the secondary filter element itself can be exchanged as it can be loaded with dust particles. The lifetime of the secondary filter element, however, is much longer than the lifetime of the primary filter element.

WO 2020/260159 discloses a filter system is proposed comprising a housing, a fluid inlet formed in a housing wall, a fluid outlet formed in a housing wall, a primary filter element and a secondary filter element, both being accommodated in the housing. The secondary filter element is arranged downstream the primary filter element on a secondary center pipe. The secondary center pipe is rigidly connected to one of the housing walls, the inside of the secondary center pipe being in fluid connection with the fluid outlet. The secondary filter element comprises a filter medium forming a body having at least one longitudinal seam. The secondary filter element comprises an end cap at its top region. The secondary filter element and the secondary center pipe are mutually connected at one of their top regions by connection elements. The secondary filter element and the secondary center pipe are configured with mutual self-positioning elements to arrange the secondary filter element on the secondary center pipe in a defined rotational position with respect to one or more struts of the secondary center pipe.

### Disclosure of the Invention

It is an object of the invention to provide a filter system for accommodating a secondary filter element and a primary filter element in a housing under reproducible conditions.

The aforementioned object is achieved according to one aspect of the invention by a filter system comprising a housing, a fluid inlet formed in a first housing part, a fluid outlet formed in the first housing part, a primary filter element and a secondary filter element, both being accommodated in the housing, characterised in that an integrated center pipe is arranged inside the housing, the integrated center pipe comprising a primary center pipe and a secondary center pipe being arranged inside the primary center pipe, the primary center pipe and the secondary center pipe being attached to each other at a first axial end of the integrated center pipe, and the first axial end being directed to the fluid outlet, wherein the primary filter element is arranged on the primary center pipe, and the secondary filter element is arranged downstream of the primary filter element on the secondary center pipe, an inside of the secondary filter element being in fluid connection with the fluid outlet, wherein the first axial end of the integrated center pipe is attached to the first housing part.

Advantageous embodiments and advantages of the invention are described in the further claims, the description and the drawings.

According to a first aspect of the invention, a filter system is proposed, comprising a housing, a fluid inlet formed in a first housing part, a fluid outlet formed in the first housing part, a primary filter element and a secondary filter element, both being accommodated in the housing. An integrated center pipe is arranged inside the housing, the integrated center pipe comprising a primary center pipe and a secondary center pipe being arranged inside the primary center pipe, the primary center pipe and the secondary center pipe being attached to each other at a first axial end of the integrated center pipe, and the first axial end being directed to the fluid outlet. The primary filter element is arranged on the primary center pipe, and the secondary filter element is arranged downstream of the primary filter element on the secondary center pipe, an inside of the secondary filter element being in fluid connection with the fluid outlet. The first axial end of the integrated center pipe is attached to the first housing part.

The filter system preferably may be used as an air cleaner for truck vehicle or heavy duty applications.

The secondary filter element is arranged inside the primary center pipe.

According to one preferred embodiment, the integrated center pipe combines the primary center pipe and the secondary center pipe as one unit. Preferably the reusable integrated center pipe may be attached to the housing of the filter system by threading or by snap-fitting. Thus the integrated center pipe may be replaced if necessary.

During service, whenever a filter element is replaced, its center pipe also will be disposed/scrapped along with its aggregates. This wastage of center pipes can be avoided by integrating them with the air cleaner housing resulting in reduction of manufacturing cost of air filter elements.

Reproducible self-positioning features for secondary filter element positioning may be implemented which ensures a better and reproducible response of mass air flow sensors mounted downstream of the filter system.

An advantage of the embodiment is to have a low service cost element design achieved by integrating the primary and secondary filter element center pipe inside the housing. The integration of center pipes inside the housing ensures a cost reduction of the primary and the secondary filter element. Scrapping of center pipes during a filter element service may be avoided, hence reduced filter element recycling costs and lesser carbon foot print as well may be achieved.

Separate primary and secondary center pipe tools may be combined in one tool, thereby reducing tooling cost. A process and/or production cost reduction may further be achieved.

Moreover, a further advantage of such a filter system is the safe and stable assembly of both the primary filter element and the secondary filter element, as well as a very economical interchangeability of the primary filter element and, if appropriate, of the secondary filter element in the event of maintenance.

The filter medium of the secondary filter element may be formed from a nonwoven or from paper or cellulose or from a mixed fiber of plastic and cellulose. A material suitable for the intended purpose of use can be selected. Advantageously, the filter medium can be designed endlessly on the circumference of the secondary filter element with at least one longitudinal seam. Planar surfaces of filter media can be used for the production of the secondary filter element, which are wound onto a corresponding shaped body and closed by welding the open ends along a longitudinal seam, for example, whereby the tightness of the secondary filter element is achieved.

According to a favorable embodiment, the first axial end of the integrated center pipe may be attached to the first housing part by threading. Thus a stable fixing of the integrated center pipe to the first housing part may be achieved. When needed the integrated center pipe may be replaced by unthreading from the first housing part.

According to a favorable embodiment, a thread may be provided at the first axial end of the integrated center pipe and is adapted to interact with a mating thread provided by the first housing part. In particular the thread may be arranged on an axial extension of the integrated center pipe. By this way stable and reproducible mounting of the integrated center pipe to the first housing part may be achieved. Through the axial extension a favorable guidance of the integrated center pipe when being mounted is possible.

According to a favorable embodiment, the mating thread may be positioned inside a guiding structure for the integrated center pipe being attached to a tube of the outlet of the first housing part. Cooperation of the axial extension of the integrated center pipe with the guiding structure may result in a stable and favorably reproducible mounting of the integrated center pipe.

According to a favorable embodiment, a gasket may be provided upstream the mating thread between the integrated center pipe and the guiding structure. Thus effective and durable sealing of the clean air side of the filter system against the raw air side may be achieved.

According to a favorable embodiment, the mating thread may be positioned inside the tube of the outlet of the first housing part. Easy mounting of the integrated center pipe to the tube of the outlet of the first housing part may be achieved.

According to a favorable embodiment, a gasket may be provided upstream the mating thread between the integrated center pipe and the tube of the outlet. Thus effective and durable sealing of the clean air side of the filter system against the raw air side may be achieved.

According to a favorable embodiment, the first axial end of the integrated center pipe may be attached to the first housing part by snap-fit elements. Thus a stable fixing of the integrated center pipe to the first housing part may be achieved. When needed the integrated center pipe may be replaced by detaching the snap-fit elements from the first housing part. Mounting by snap-fit elements enables a quick and favorably reproducible positioning of the integrated center pipe in the first housing part.

According to a favorable embodiment, a first snap-fit element may be provided at the first axial end of the integrated center pipe and is adapted to interact with a second snap-fit element provided by the first housing part. By this way stable and reproducible mounting of the integrated center pipe to the first housing part may be achieved. Mounting by snap-fit elements enables a quick and favorably reproducible positioning of the integrated center pipe in the first housing part.

According to a favorable embodiment, the second snap-fit element may be positioned radially inside a wall of a groove for accommodating a support structure of an end plate of the primary filter element. Thus a stable and favorably reproducible mounting of the integrated center pipe to the first housing part may be achieved. The wall of the groove serves as a stable counterpart for the first snap-fit element of the integrated center pipe. According to a favorable embodiment, the snap-fit elements may be formed as hook-like shapes for interacting with each other when the integrated center pipe is mounted to the first housing part. Thus an effective and stable connection between the snap-fit elements may be achieved. Once mounted the integrated center pipe can only be detached by surpassing a definite force of the snap-fit connection.

According to a favorable embodiment, the secondary center pipe may have a predominantly conical shape, and the primary center pipe may have a predominantly cylindrical shape. This enables to use approved designs of primary and secondary filter elements in the proposed filter system with the integrated center pipe.

Advantageously, the inventive filter system with a primary and a secondary filter element can be used as an air filter, in particular as an air filter of an internal combustion engine. The safe operation of internal combustion engines is also based on safe and favorable filtering of the intake air for combustion operation, in particular with an undisturbed flow characteristic of the air at the mass flow sensor. The described filter system represents an economic and reliable possibility for this purpose. The use of the filter system as a particle filter, in particular as a particle filter of an internal combustion engine, is also advantageous. Again, the secure assembly and economic interchangeability of the described filter elements is of advantage. Conveniently, the secondary filter element may remain in the housing when the primary filter element is changed. This ensures that the clean side of the filter system is also effectively protected against penetrating dirt particles during maintenance of the filter system.

### Brief Description of the Drawings

Further advantages result from the following drawing description. Embodiments of the invention are shown in the drawings. The drawings, the description, and the claims contain numerous features in combination. The person skilled in the art will expediently also consider the features individually and combine them into sensible further combinations. For example,
- Fig. 1: shows a longitudinal cut view of a filter system according to an embodiment of the invention;
- Fig. 2: shows the filter system of Fig. 1 in an exploded view;
- Fig. 3: shows a primary filter element of the filter system according to Fig. 1;
- Fig. 4: shows a secondary filter element of the filter system according to Fig. 1;
- Fig. 5: shows a detail Z of the first end plate of the primary filter element according to Fig. 1;
- Fig. 6: shows a detail Y of the top region of the secondary center pipe according to Fig. 1;
- Fig. 7: shows a detail X of the threading of the integrated center pipe to the first housing part according to Fig. 1;
- Fig. 8: shows a further detail W of the threading according to Fig. 1;
- Fig. 9: shows a longitudinal cut view of a filter system according to a further embodiment of the invention;
- Fig. 10: shows the filter system of Fig. 9 in an exploded view;
- Fig. 11: shows a primary filter element of the filter system according to Fig. 9;
- Fig. 12: shows a secondary filter element of the filter system according to Fig. 9;
- Fig. 13: shows a detail Z of the first end plate of the primary filter element according to Fig. 9;
- Fig. 14: shows a detail Y of the top region of the secondary center pipe according to Fig. 9;
- Fig. 15: shows a detail X of the threading of the integrated center pipe to the first housing part according to Fig. 9;
- Fig. 16: shows a longitudinal cut view of a filter system according to a further embodiment of the invention;
- Fig. 17: shows the filter system of Fig. 16 in an exploded view;
- Fig. 18: shows a primary filter element of the filter system according to Fig. 16;
- Fig. 19: shows a secondary filter element of the filter system according to Fig. 16;
- Fig. 20: shows a detail Z of the first end plate of the primary filter element according to Fig. 16;
- Fig. 21: shows a detail Y of the top region of the secondary center pipe according to Fig. 16;
- Fig. 22: shows a detail X of the snap-fitting of the integrated center pipe to the first housing part according to Fig. 16; and
- Fig. 23: shows a further detail W of the snap-fitting according to Fig. 16.

### Detailed Description of the Drawings

The figures show merely examples and are not intended to be limiting. Similar or equal elements are referred to with same reference numerals in the Figures.

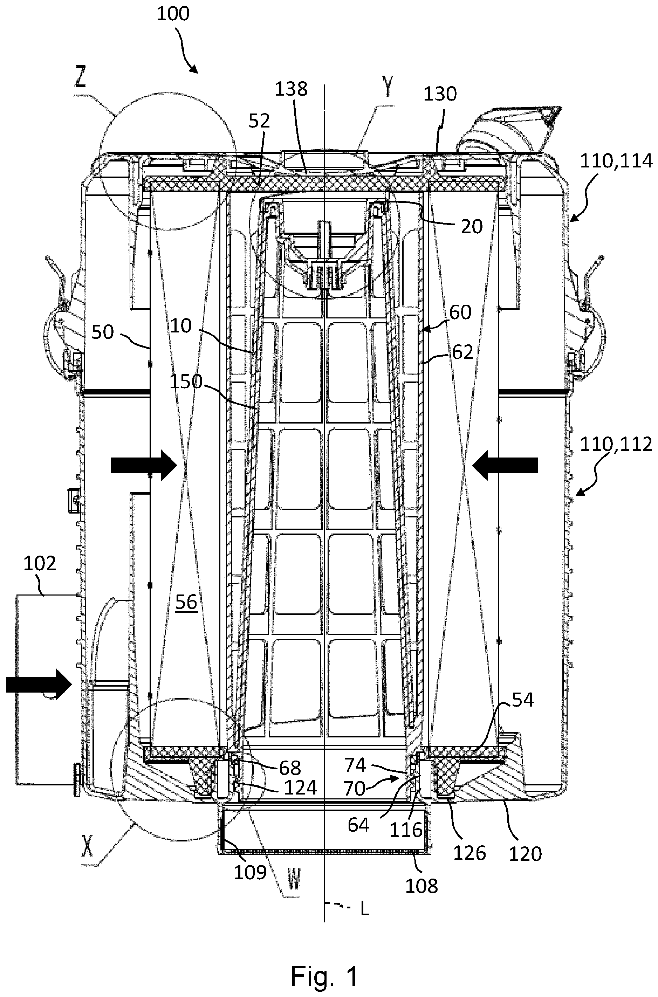

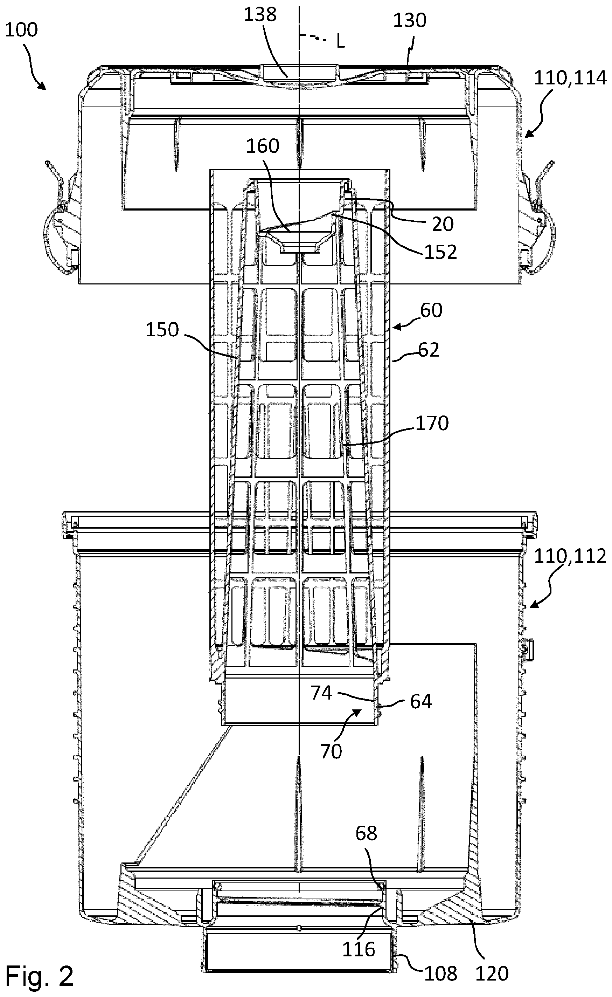

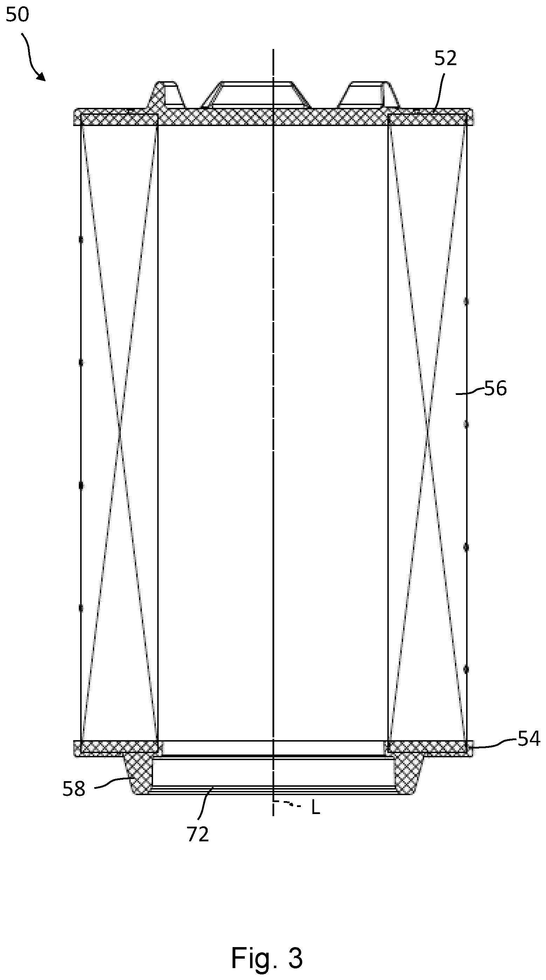

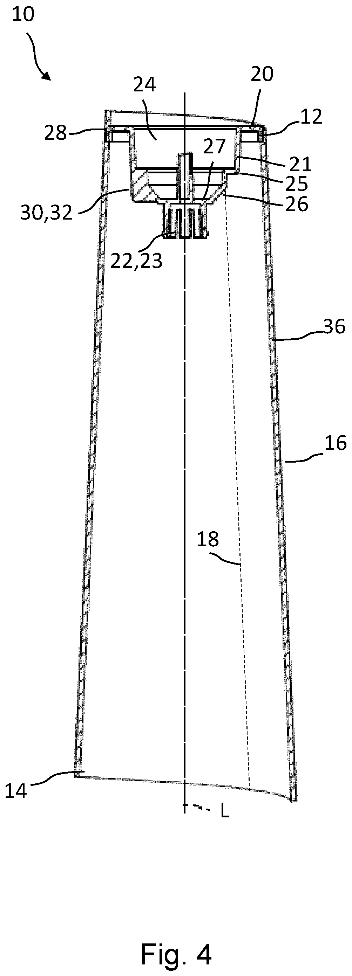

Figure 1 shows a longitudinal cut view of a filter system 100 according to an embodiment of the invention. Figure 2 shows the filter system 100 of Figure 1 in an exploded view. Figure 3 shows a primary filter element 50 of the filter system 100 and Figure 4 shows a secondary filter element 10 of the filter system 100.

The filter system 100 comprises a housing 110, a fluid inlet 102 formed in a first housing part 112, a fluid outlet 108 formed in the first housing part 112, a primary filter element 50 and a secondary filter element 10, both being accommodated in the housing 110. In this embodiment, the housing 110 may consist of the first housing part 112 and a second housing part 114. The segments 112, 114 are connected to each other by, e.g., clamps or the like.

An integrated center pipe 60 is arranged inside the housing 110. The integrated center pipe 60 comprises a primary center pipe 62 and a secondary center pipe 150 being arranged inside the primary center pipe 62. The primary center pipe 62 and the secondary center pipe 150 are attached to each other at a first axial end 70 of the integrated center pipe 60, wherein the first axial end 70 is directed to the fluid outlet 108. The secondary center pipe 150 has a predominantly conical shape and the primary center pipe 62 has a predominantly cylindrical shape.

The primary filter element 50 is arranged on the primary center pipe 62, and the secondary filter element 10 is arranged downstream of the primary filter element 50 on the secondary center pipe 150. The inside of the secondary filter element 10 is in fluid connection with the fluid outlet 108. The first axial end 70 of the integrated center pipe 150 is attached to the first housing part 112.

The hollow cylindrical primary filter element 50 is accommodated in the housing 110. For removing the primary filter element 50 for maintenance or exchange the housing part 114 can be removed from the bottom housing part 112.

The body of the primary filter element 50 is made of a filter medium 56 which may be pleated, for instance. The primary filter element 50 is covered at both ends by ring shaped end plates 52, 54, which are made, for example, from polyurethane which is well known in the prior art. Sealing structures and supporting ribs are arranged at the exterior sides of the end plates 52, 54. The primary filter element 50 is clamped between the first housing part 112 and the second housing part 114 in a sealing tight manner so that a fluid has to pass through the primary filter element 50 in a radial direction, which is indicated by bold arrows in Figure 1. The endplate 54 of the primary filter element 50 is accommodated in the first housing part 112 which is provided with a groove 126.

The primary filter element 50 comprises an opening 72 surrounded by a support structure 58 of the second end plate 54 for being supported when mounted in a housing 110 of the filter system 100. The opening 72 is provided for being adapted to an outlet 108 of the housing 110. The primary filter element 50 is adapted to be mounted on an integrated center pipe 60 of the filter system 100.

In its front face 130, the cover part 114 is provided with a recess 138 which extends into the interior of the housing 110.

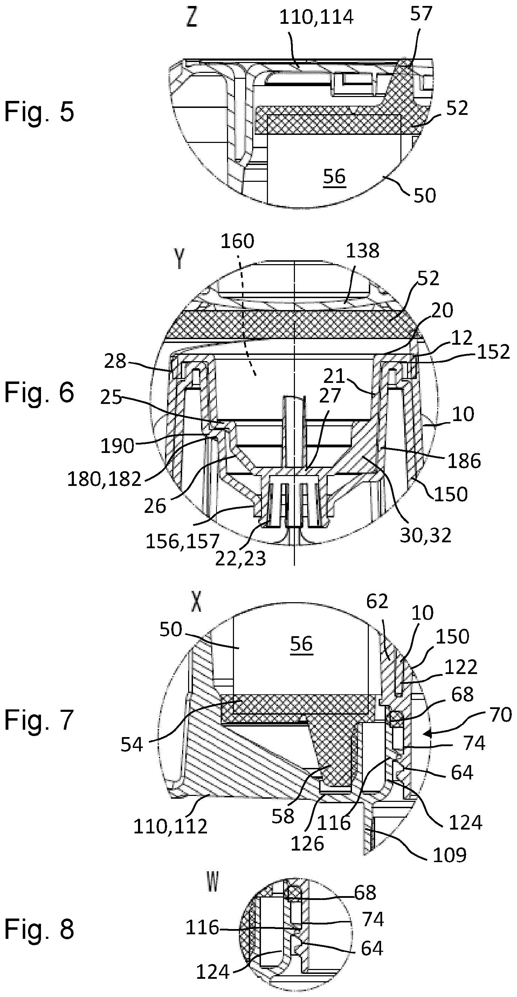

Inside the primary filter element 50 the secondary filter element 10 is arranged. The primary and secondary filter elements 50, 10 are arranged concentrically about an axis in longitudinal direction L. The secondary filter element 10 is arranged downstream the primary filter element 50, inside the primary center pipe 60, so that fluid has to pass through the secondary filter element 10 on its way to the fluid outlet 108. The secondary filter element 10 is arranged on the secondary center pipe 150 which is part of the integrated center pipe 60. The lower part of the secondary center pipe 150 merges with the fluid outlet 108 of the bottom housing wall 120. The secondary filter element 10 comprises a filter medium 16 forming a body 36 with at least one weld seam 18 along the longitudinal direction L, as may be seen in Figure 8.

The secondary filter element 10 comprises a closed end cap 20 at its top region 12, wherein the secondary filter element 10 and the secondary center pipe 150 are mutually connected at their top regions 12, 152 by connection elements. The open ended side of the secondary filter element 10 is accommodated in a circular groove 122 in the bottom wall 120.

The end cap 20 is provided with one or more connection elements 22 which are intended to connect the secondary filter element 10 to a secondary center pipe 150 of the filter system 100. The end cap 20 is provided with a self-positioning element 30 to arrange the secondary filter element 10 on the secondary center pipe 150 of the filter system 100 in a defined rotational position with respect to one or more struts 170 of the secondary center pipe 150 of the filter system 100.

The end cap 20 of the secondary filter element 10 has a pot-like shape. The self-positioning element 30 extends into the interior of the secondary filter medium 16.

The end cap 20 is provided with a projection element 32 extending in axial direction L. In particular, the projection element 32 is arranged eccentrically on the end cap 20 with respect to a center axis of the end cap 20.

Figure 4 shows a first embodiment of a secondary filter element 10 with an end cap 20 having a recess 24 at its exterior side. The secondary filter element 10 has a body 36 consisting of a filter medium 16. The filter medium 16 can be a nonwoven material, paper, cellulose or a mixed fiber of plastic and cellulose. The filter medium 16 can be designed endlessly on the circumference of the secondary element 10 with at least one longitudinal weld seam 18. The filter body 36 formed thereof has a conical shape with a large diameter at a bottom side 14 and a smaller diameter at the top region 12 of the body 36 where the end cap 20 is mounted. Preferably the filter medium 16 is connected to the end cap 20 by way of a circumferential weld seam 28. The recess 24 in the end cap 20 extends into the interior of the body 36.

The secondary center pipe 150 is provided as a carrier of the secondary filter element 10 as shown in Figure 4. The secondary filter element 10 and the secondary center pipe 150 each comprise complementary connecting means with which they can be connected to one another at one of their end faces, shown on top in the Figure 4. This allows for a safe and stable assembly of both the primary filter element 50 (Figure 3) and the secondary filter element 10, as well as a very economical interchangeability of the primary filter element 50 and, if appropriate, of the secondary filter element 10 in the event of maintenance. The secondary filter element 10 rests firmly on the secondary center pipe 150. Due to the closed end cap 20 of the secondary filter element 10, even with dismounted primary filter element 50 the clean side of the filter system 100 is protected against particulate matter even if fluid is still sucked through the secondary filter element 10.

Figure 5 shows a detail Z of the first end plate 52 of the primary filter element 50 according to Figure 1. The first end plate 52 is pressed with a support structure 57 of the end plate 52 against the second housing part 114 when mounted in the housing 110 and both housing parts 112, 114 are closed.

Figure 6 shows a detail Y of the top region 152 of the secondary center pipe 150 with the second filter element 10 mounted according to Figure 1.

The secondary filter element 10 comprises a closed end cap 20 at its top region 12, wherein the secondary filter element 10 and the secondary center pipe 150 are mutually connected at their top regions 12, 152 by connection elements. The open ended side of the secondary filter element 10 is accommodated in a circular groove 122 in the bottom wall 120.

The end cap 20 has a pot like shape comprising two segments, an upper segment 21 with a larger diameter carrying the flange and the bottom segment 26 with a smaller diameter. At the interface between the upper segment 21 and the bottom segment 26, a step 25 is formed due to the different diameters of the segments 21, 26. The bottom segment 26 shows a conical part at the interface and a tapered part towards the closed bottom 27. At the outside of the bottom 27 connection elements 22, embodied as, e.g., snap beams 23, extend further in longitudinal direction. The connection elements 22 are intended to cooperate with corresponding one or more connection elements of the secondary center pipe 150.

In the recess 24 a self-positioning element 30 is arranged, embodied, e.g., as a projection element 32. The projection element 32 extends from the step 25 at the interface between the upper segment 21 and the bottom segment 26 towards the beginning of the tapered section of the bottom segment 26. When seen from the top of the end cap 20, the projection element 32 forms a depression in the step 25 between the upper segment 21 and the bottom segment 26 and may be open towards the bottom segment 26.

The end cap 20 is intended to extend into the interior of the secondary center pipe 150 (Figure 6). In particular the recess 24 of the end cap 20 extends inside a receptacle 160 of the secondary center pipe 150. In a mounted position of the secondary filter element 10 on the secondary center pipe 150, the connection elements 22 cooperate with counter elements 156 for axial connection while the self-positioning element 30 (projection element 32) cooperates with a counter self-positioning element 180 of the secondary center pipe 150.

The secondary center pipe 150 provides a guiding surface 182 as self-positioning element 180 inside a receptacle 160 at the top region 152 of the secondary center pipe 150. The guiding surface 182 runs on the shell of the receptacle 160 and descents at both sides from a top axial position to a minimum axial position. Thus the guiding surface 182 can be described as comprising at least one preferably spiral ramp surface. Preferably, the guiding surface 182 comprises two ramp sections, both extending from a top position to the minimum axial position in counter rotating directions. As the guiding surface 182 extends in a radially inward direction, the projection element 32 can move on the guiding surface 182. In the minimum axial position a pocket 186 is preferably arranged which is intended to receive the projection element 32 of the secondary filter element 10 (Figure 6). The pocket 186 is preferably arranged diametrically opposite of the maximum point 190 of the guiding surface 182. That means the ramp sections preferably both end at the position of the pocket from opposite sides.

The contour of the receptacle 160 corresponds to the exterior contour of the endcap 20 of the secondary filter element 10. The receptacle 160 has an open ended bottom which ends in a connection element 156 for the connection elements 22 of the secondary filter element 10, i.e. the snap beams 23 can be hooked on the bottom of the receptacle 160 as locking element 157 provides a snap fit connection between the secondary center pipe 150 and the secondary filter element 10. The receptacle 160 is funnel shaped in its bottom region so that introducing the snap beams 23 is facilitated.

Figure 7 shows a detail X of the threading of the integrated center pipe 60 to the first housing part 112 according to Figure 1, whereas Figure 8 shows a further detail W of the threading according to Figure 1.

The first axial end 70 of the integrated center pipe 60 is attached to the first housing part 112 by threading. A thread 64 is provided at the first axial end 70 of the integrated center pipe 60 which is adapted to interact with a mating thread 116 provided by the first housing part 112. In particular the thread 64 is arranged on an axial extension 74 of the integrated center pipe 60. The mating thread 116 is positioned inside a guiding structure 124 for the integrated center pipe 60 being attached to a tube 109 of the outlet 108 of the first housing part 112. The guiding structure 124 provides an easy and stable mounting of the integrated center pipe 60 to the first housing part 112.

A gasket 68 is provided upstream the mating thread 116 between the integrated center pipe 60 and the guiding structure 124. Thus proper sealing between the integrated center pipe 60 and the first housing part 112 is achieved.

The primary filter element 50 is positioned in the first housing part 112 by inserting a support structure 58 of the second end plate 54 of the primary filter element 50 into a groove 126 of the first housing part 112. Thus the primary filter element 50 is mounted in a precise and stable manner in the first housing part 112.

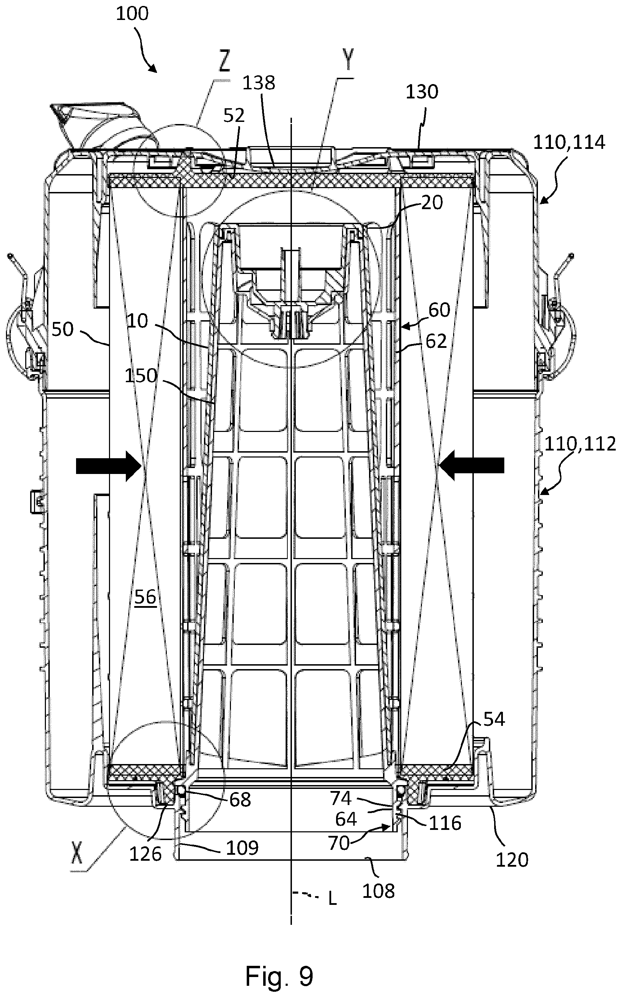

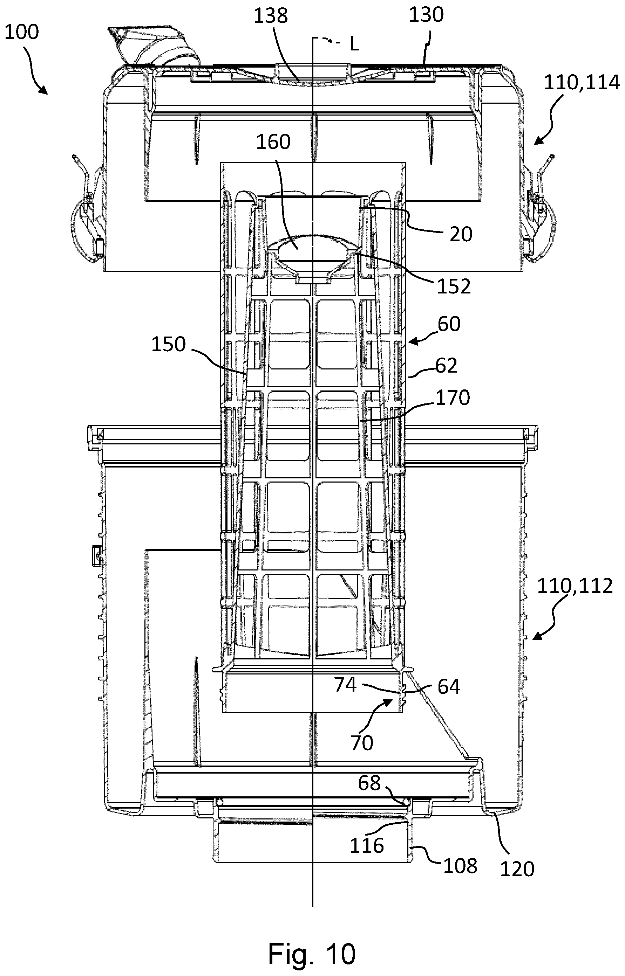

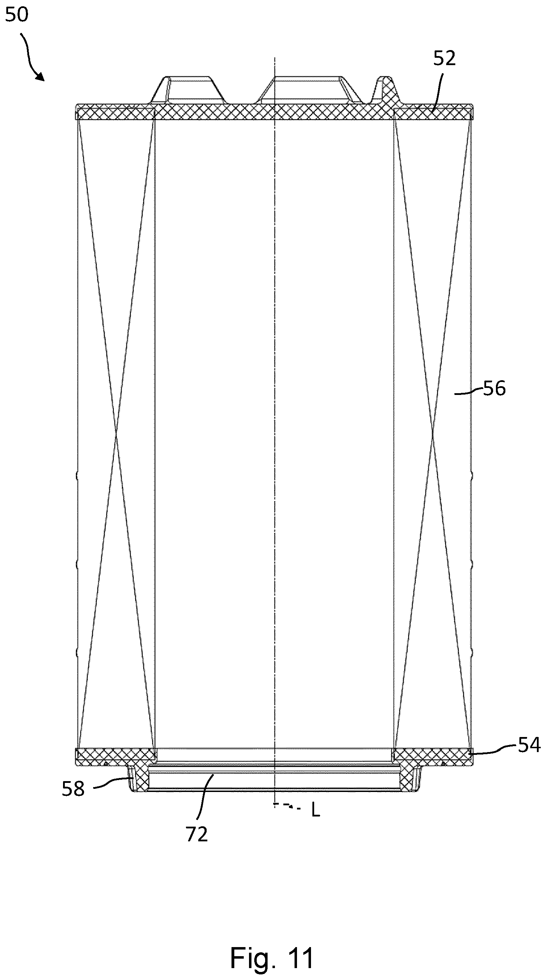

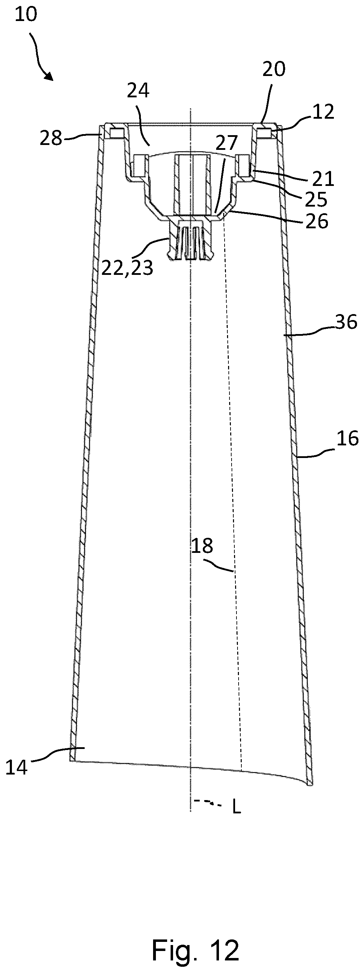

Figure 9 shows a longitudinal cut view of a filter system 100 according to a further embodiment of the invention. Figure 10 shows the filter system 100 of Figure 9 in an exploded view. Figure 11 shows a primary filter element 50 of the filter system 100 and Figure 12 shows a secondary filter element 10 of the filter system 100.

In order to avoid unnecessary repetition of description only the features of the embodiment are described which are different from the first embodiment.

In the embodiment shown in Figures 9 to 15, the first axial end 70 of the integrated center pipe 60 is also attached to the first housing part 112 by threading. A thread 64 is provided at the first axial end 70 of the integrated center pipe 60 which is adapted to interact with a mating thread 116 provided by the first housing part 112. The mating thread 116 is positioned inside the tube 109 of the outlet 108 of the first housing part 112.

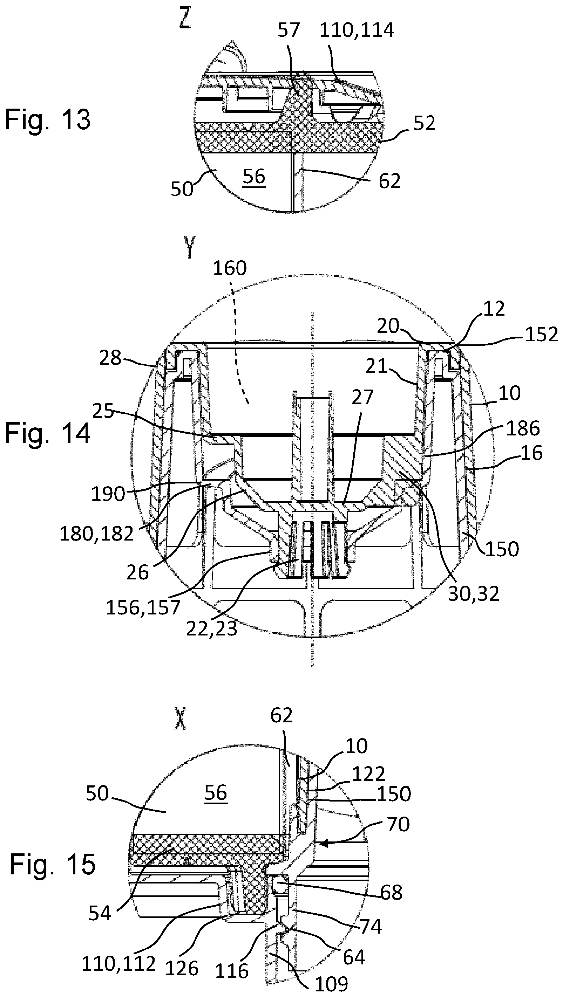

Figure 13 shows a detail Z of the first end plate 52 of the primary filter element 50 according to Figure 9. The support structure 57 of the first end plate 52 is pressed against the second housing part 114 when mounted in the housing 110 and both housing parts 112, 114 are closed.

Figure 14 shows a detail Y of the top region 152 of the secondary center pipe 150 according to Figure 9. The secondary filter element 10 is mounted in the same way as described with the embodiment depicted in Figure 6.

Figure 15 shows a detail X of the threading of the integrated center pipe 60 to the first housing part 112 according to Figure 9. The thread 64 is provided at the first axial end 70 of the integrated center pipe 60. The thread 64 interacts with the mating thread 116 provided by the first housing part 112. The mating thread 116 is positioned inside the tube 109 of the outlet 108 of the first housing part 112. A gasket 68 is provided upstream the mating thread 116 between the integrated center pipe 60 and the tube 109 of the outlet 108. Thus proper sealing between the integrated center pipe 60 and the first housing part 112 is achieved.

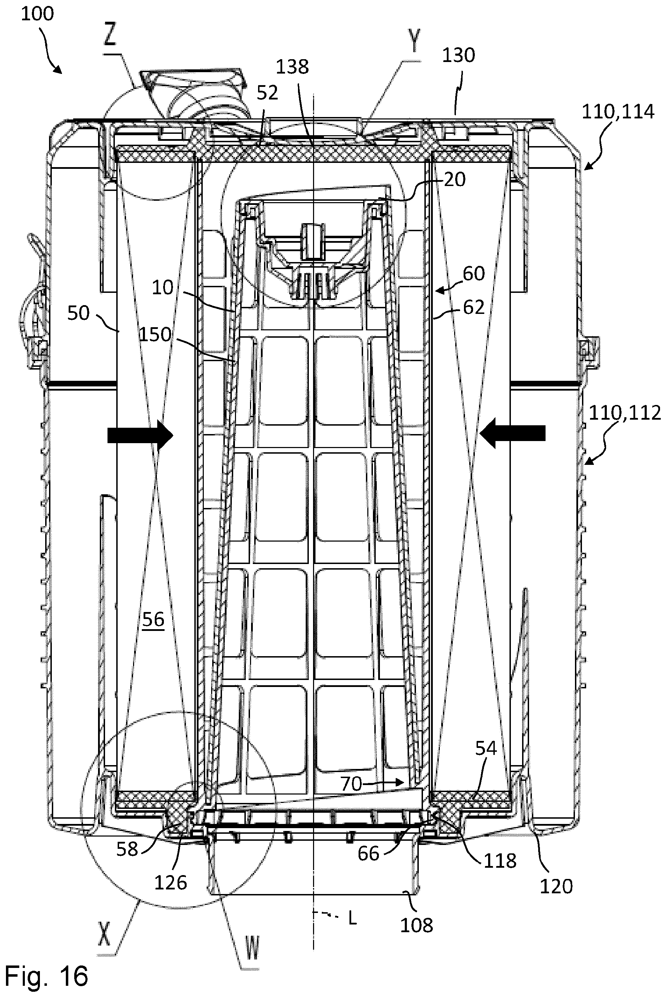

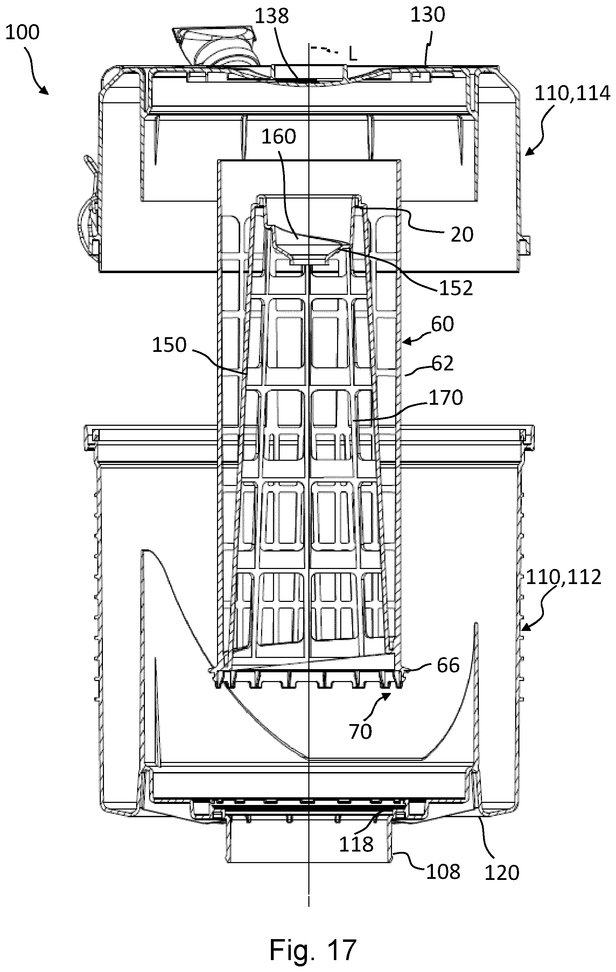

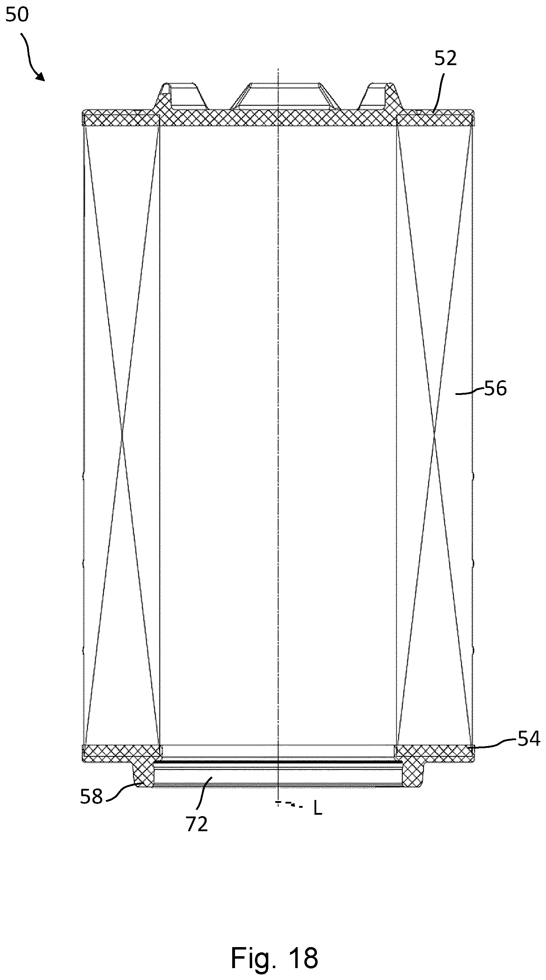

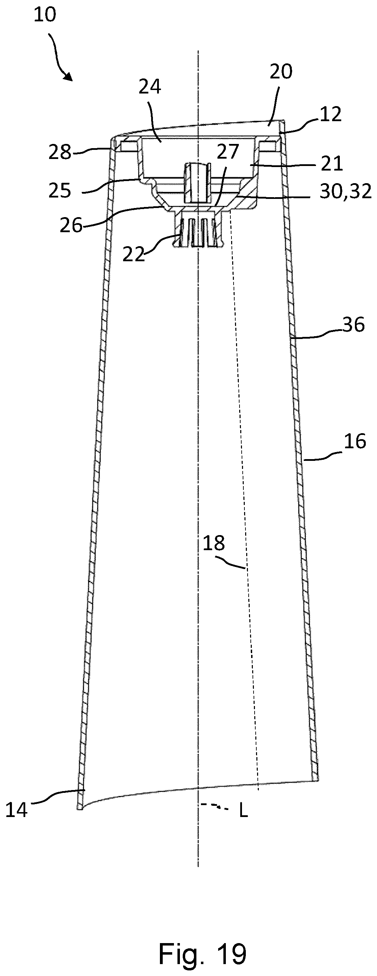

Figure 16 shows a longitudinal cut view of a filter system 100 according to a further embodiment of the invention. Figure 17 shows the filter system 100 of Figure 16 in an exploded view. Figure 18 shows a primary filter element 50 of the filter system 100 and Figure 19 shows a secondary filter element 10 of the filter system 100.

The difference to the embodiments shown in the Figures 1 to 15 is that in this embodiment the first axial end 70 of the integrated center pipe 60 is attached to the first housing part 112 by snap-fit elements 66, 118. A first snap-fit element 66 is provided at the first axial end 70 of the integrated center pipe 60 which is adapted to interact with a second snap-fit element 118 provided by the first housing part 112. By this way easy and reproducible mounting of the integrated center pipe 60 to the first housing part 112 can be achieved.

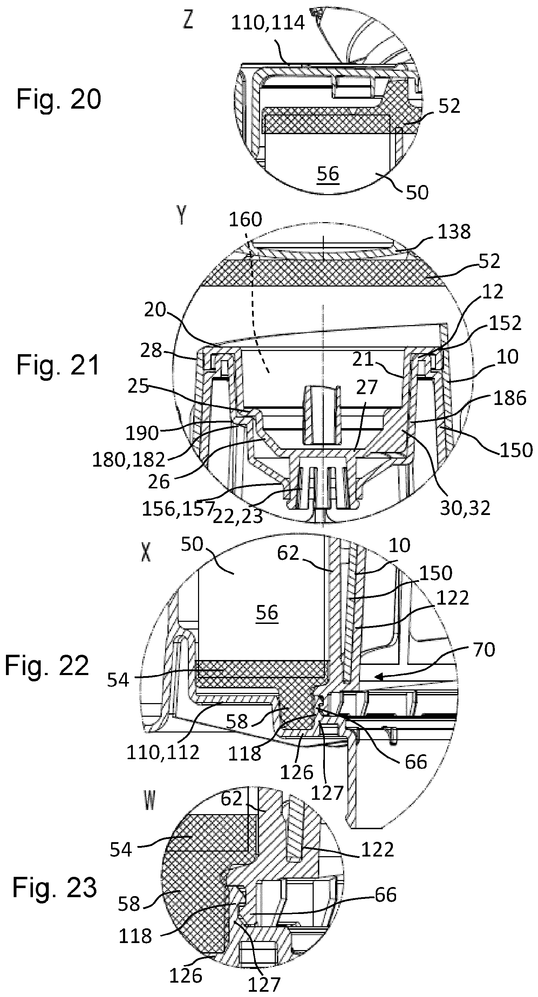

Figure 20 shows a detail Z of the first end plate 52 of the primary filter element 50 according to Figure 16. The support structure 57 of the first end plate 52 is pressed against the second housing part 114 when mounted in the housing 110 and both housing parts 112, 114 are closed.

Figure 21 shows a detail Y of the top region 152 of the secondary center pipe 60 according to Figure 16. The secondary filter element 10 is mounted in the same way as described with the previous embodiments depicted in Figures 6 and 14.

Figure 22 shows a detail X of the snap-fitting of the integrated center pipe to the first housing part according to Figure 16, whereas Figure 23 shows a further detail W of the snap-fitting according to Figure 16. The second snap-fit element 118 is positioned radially inside a wall 127 of a groove 126 for accommodating a support structure 58 of an end plate 54 of the primary filter element 50. Thus when inserting the integrated center pipe 60 into the first housing part 112 the snap-fit elements 66 at the first axial end 70 of the integrated center pipe 60 cooperates with the mating second snap-fit elements 118 at the wall 127 of the groove 126 of the first housing part 112. The snap-fit elements 66,118 are formed as a hook-like shape for interacting with each other when the integrated center pipe 60 is mounted to the first housing part 112. By this way an easy and stable connection of the integrated center pipe 60 to the first housing part 112 may be achieved.

## Claims

1. A filter system (100) comprising:
a housing (110);
a fluid inlet (102) formed in a first housing part (112);
a fluid outlet (108) formed in the first housing part (112); and
a primary filter element (50) and a secondary filter element (10), both being accommodated in the housing (110),
**characterised in that** an integrated center pipe (60) is arranged inside the housing (110), the integrated center pipe (60) comprising a primary center pipe (62) and a secondary center pipe (150) being arranged inside the primary center pipe (62), the primary center pipe (62) and the secondary center pipe (150) being attached to each other at a first axial end (70) of the integrated center pipe (60), and the first axial end (70) being directed to the fluid outlet (108),
wherein the primary filter element (50) is arranged on the primary center pipe (62), and the secondary filter element (10) is arranged downstream of the primary filter element (50) on the secondary center pipe (150), an inside of the secondary filter element (10) being in fluid connection with the fluid outlet (108), and
wherein the first axial end (70) of the integrated center pipe (60) is attached to the first housing part (112).

2. The filter system according to claim 1, wherein the first axial end (70) of the integrated center pipe (60) is attached to the first housing part (112) by threading.

3. The filter system according to claim 2, wherein a thread (64) is provided at the first axial end (70) of the integrated center pipe (60) and is adapted to interact with a mating thread (116) provided by the first housing part (112), in particular wherein the thread (64) is arranged on an axial extension (74) of the integrated center pipe (60).

4. The filter system according to claim 3, wherein the mating thread (116) is positioned inside a guiding structure (124) for the integrated center pipe (60) being attached to a tube (109) of the outlet (108) of the first housing part (112).

5. The filter system according to claim 4, wherein a gasket (68) is provided upstream the mating thread (116) between the integrated center pipe (60) and the guiding structure (124).

6. The filter system according to claim 3, wherein the mating thread (116) is positioned inside the tube (109) of the outlet (108) of the first housing part (112).

7. The filter system according to claim 6, wherein a gasket (68) is provided upstream the mating thread (116) between the integrated center pipe (60) and the tube (109) of the outlet (108).

8. The filter system according to claim 1, wherein the first axial end (70) of the integrated center pipe (60) is attached to the first housing part (112) by snap-fit elements (66, 118).

9. The filter system according to claim 8, wherein a first snap-fit element (66) is provided at the first axial end (70) of the integrated center pipe (60) and is adapted to interact with a second snap-fit element (118) provided by the first housing part (112).

10. The filter system according to claim 8 or 9, wherein the second snap-fit element (118) is positioned radially inside a wall (127) of a groove (126) for accommodating a support structure (58) of an end plate (54) of the primary filter element (50).

11. The filter system according to any one of claims 8 to 10, wherein the snap-fit elements (66, 118) are formed as hook-like shapes for interacting with each other when the integrated center pipe (60) is mounted to the first housing part (112).

12. The filter system according to any one of the preceding claims, wherein the secondary center pipe (150) has a predominantly conical shape, and the primary center pipe (62) has a predominantly cylindrical shape.

## Patentansprüche

1. Filtersystem (100) umfassend:
ein Gehäuse (110);
einen in einem ersten Gehäuseteil (112) gebildeten Fluideinlass (102);
einen in dem ersten Gehäuseteil (112) gebildeten Fluidauslass (108); und
ein Primärfilterelement (50) und ein Sekundärfilterelement (10), die beide in dem Gehäuse (110) aufgenommen sind,
**dadurch gekennzeichnet, dass** innerhalb des Gehäuses (110) ein integriertes Mittelrohr (60) angeordnet ist, wobei das integrierte Mittelrohr (60) ein Primärmittelrohr (62) und ein Sekundärmittelrohr (150) umfasst, das innerhalb des Primärmittelrohrs (62) angeordnet ist, wobei das Primärmittelrohr (62) und das Sekundärmittelrohr (150) an einem ersten Achsende (70) des integrierten Mittelrohrs (60) miteinander verbunden sind und das erste Achsende (70) zum Fluidauslass (108) gerichtet ist,
wobei das Primärfilterelement (50) an dem Primärmittelrohr (62) angeordnet ist, und das Sekundärfilterelement (10) stromabwärts des Primärfilterelements (50) an dem Sekundärmittelrohr (150) angeordnet ist, wobei ein Innenraum des Sekundärfilterelements (10) in Fluidverbindung mit dem Fluidauslass (108) steht, und
wobei das erste Achsende (70) des integrierten Mittelrohrs (60) an dem ersten Gehäuseteil (112) befestigt ist.

2. Filtersystem nach Anspruch 1, wobei das erste Achsende (70) des integrierten Mittelrohrs (60) an dem ersten Gehäuseteil (112) durch Einschrauben befestigt ist.

3. Filtersystem nach Anspruch 2, wobei am ersten Achsende (70) des integrierten Mittelrohrs (60) ein Gewinde (64) vorgesehen ist, das dazu ausgelegt ist, mit einem vom ersten Gehäuseteil (112) bereitgestellten Gegengewinde (116) zusammenzuwirken, insbesondere wobei das Gewinde (64) an einer axialen Verlängerung (74) des integrierten Mittelrohrs (60) angeordnet ist.

4. Filtersystem nach Anspruch 3, wobei das Gegengewinde (116) innerhalb einer Führungsstruktur (124) für das mit einem Rohr (109) des Auslasses (108) des ersten Gehäuseteils (112) verbundene integrierte Mittelrohr (60) positioniert ist.

5. Filtersystem nach Anspruch 4, wobei stromaufwärts des Gegengewindes (116) zwischen dem integrierten Mittelrohr (60) und der Führungsstruktur (124) ein Dichtring (68) vorgesehen ist.

6. Filtersystem nach Anspruch 3, wobei das Gegengewinde (116) innerhalb des Rohrs (109) des Auslasses (108) des ersten Gehäuseteils (112) positioniert ist.

7. Filtersystem nach Anspruch 6, wobei stromaufwärts des Gegengewindes (116) zwischen dem integrierten Mittelrohr (60) und dem Rohr (109) des Auslasses (108) ein Dichtring (68) vorgesehen ist.

8. Filtersystem nach Anspruch 1, wobei das erste Achsende (70) des integrierten Mittelrohrs (60) an dem ersten Gehäuseteil (112) durch Rastelemente (66, 118) befestigt ist.

9. Filtersystem nach Anspruch 8, wobei ein erstes Rastelement (66) am ersten Achsende (70) des integrierten Mittelrohrs (60) vorgesehen ist und dazu ausgelegt ist, mit einem zweiten Rastelement (118) zusammenzuwirken, das vom ersten Gehäuseteil (112) bereitgestellt wird.

10. Filtersystem nach Anspruch 8 oder 9, wobei das zweite Rastelement (118) radial innerhalb einer Wand (127) einer Nut (126) zur Aufnahme einer Stützstruktur (58) einer Endplatte (54) des Primärfilterelements (50) positioniert ist.

11. Filtersystem nach einem der Ansprüche 8 bis 10, wobei die Rastelemente (66, 118) als hakenartige Formen ausgebildet sind, um miteinander zusammenzuwirken, wenn das integrierte Mittelrohr (60) an dem ersten Gehäuseteil (112) montiert ist.

12. Filtersystem nach einem der obigen Ansprüche, wobei das Sekundärmittelrohr (150) eine überwiegend konische Form aufweist und das Primärmittelrohr (62) eine überwiegend zylindrische Form aufweist.

## Revendications

1. Système de filtre (100) comprenant:
un boîtier (110);
une entrée de fluide (102) formée dans une première partie de boîtier (112);
une sortie de fluide (108) formée dans la première partie de boîtier (112); et
un élément filtrant primaire (50) et un élément filtrant secondaire (10), tous deux logés dans le boîtier (110),
**caractérisé en ce qu'**un tube central intégré (60) est disposé à l'intérieur du boîtier (110), le tube central intégré (60) comprenant un tube central primaire (62) et un tube central secondaire (150) disposé à l'intérieur du tube central primaire (62), le tube central primaire (62) et le tube central secondaire (150) étant reliés l'un à l'autre au niveau d'une première extrémité axiale (70) du tube central intégré (60), et la première extrémité axiale (70) étant orientée vers la sortie de fluide (108),
dans lequel l'élément filtrant primaire (50) est disposé sur le tube central primaire (62), et l'élément filtrant secondaire (10) est disposé en aval de l'élément filtrant primaire (50) sur le tube central secondaire (150), l'intérieur de l'élément filtrant secondaire (10) étant en communication fluidique avec la sortie de fluide (108), et
dans lequel la première extrémité axiale (70) du tube central intégré (60) est fixée à la première partie de boîtier (112).

2. Système de filtre selon la revendication 1, dans lequel la première extrémité axiale (70) du tube central intégré (60) est fixée à la première partie de boîtier (112) par vissage.

3. Système de filtre selon la revendication 2, dans lequel un filetage (64) est prévu à la première extrémité axiale (70) du tube central intégré (60) et est adapté pour interagir avec un contre-filet (116) prévu par la première partie de boîtier (112), en particulier dans lequel le filetage (64) est disposé sur une extension axiale (74) du tube central intégré (60).

4. Système de filtre selon la revendication 3, dans lequel le contre-filet (116) est positionné à l'intérieur d'une structure de guidage (124) pour le tube central intégré (60) destiné à être raccordé à un tube (109) de la sortie (108) de la première partie de boîtier (112).

5. Système de filtre selon la revendication 4, dans lequel une bague d'étanchéité (68) est prévue en amont du contre-filet (116) entre le tube central intégré (60) et la structure de guidage (124).

6. Système de filtre selon la revendication 3, dans lequel le contre-filet (116) est positionné à l'intérieur tube (109) de la sortie (108) de la première partie de boîtier (112).

7. Système de filtre selon la revendication 6, dans lequel une bague d'étanchéité (68) est prévue en amont du contre-filet (116) entre le tube central intégré (60) et le tube (109) de la sortie (108).

8. Système de filtre selon la revendication 1, dans lequel la première extrémité axiale (70) du tube central intégré (60) est fixée à la première partie de boîtier (112) par des éléments de verrouillage (66, 118).

9. Système de filtre selon la revendication 8, dans lequel un premier élément de verrouillage (66) est prévu au niveau de la première extrémité axiale (70) du tube central intégré (60) et est adapté pour interagir avec un deuxième élément de verrouillage (118) prévu par la première partie de boîtier (112).

10. Système de filtre selon la revendication 8 ou 9, dans lequel le deuxième élément de verrouillage (118) est positionné radialement à l'intérieur d'une paroi (127) d'une rainure (126) destinée à recevoir une structure de support (58) de la plaque d'extrémité (54) de l'élément filtrant primaire (50).

11. Système de filtre selon l'une quelconque des revendications 8 à 10, dans lequel les éléments de verrouillage (66, 118) sont formés en forme de crochets pour interagir les uns avec les autres lorsque le tube central intégré (60) est monté sur la première partie de boîtier (112).

12. Système de filtre selon l'une quelconque des revendications précédentes, dans lequel le tube central secondaire (150) présente une forme principalement conique, et le tube central primaire (62) présente une forme principalement cylindrique.
